# EUROPEAN PATENT APPLICATION

(11) **EP 1 202 228 A1**
(43) Date of publication of application: **02.05.2002**
(21) Application number: 01650125.6
(22) Date of filing: 16.10.2001
(51) Int. Cl.: G07F 7/10, G07C 9/00

(54) **A user authentication system and process**

(30) Priority: 17.10.2000 EP 00650160; 18.01.2001 EP 01650009; 26.02.2001 IE 010173
(71) Applicant: Varette Limited, Sandyford Industrial Park, Dublin 18 (IE)
(72) Inventor: Harris, Vance, Monkstown, County Dublin (IE); Fearon, Patrick, Blackrock, County Dublin (IE); O'Grady, Paul, Clonskeagh, Dublin 14 (IE)
(74) Representative: Weldon, Michael James

(57) **Abstract**

User authentication for transactions employs a layered mechanism in which user identifiers are used initially. An initial impostor ratio (I) is dynamically determined (30-32) according to the number and nature of initial layers, a general rate of attack (RA), and customer previous transactions (RAF). In order for a user to be accepted his or her transaction score must be less than a dynamically determined threshold (Th) that is observed as the minima of a cost curve generated by the Impostor ratio I, the value of the transaction Cfa, the cost of requesting a security layer Clayer and the voiceprint probability distribution Pfa and Pfr. If it is not possible to accept based on this initial cost curve, a new threshold is calculated using a fresh impostor ratio determined according to further security operations. The threshold is re-determined after employing each of a successive number of security layers until all are exhausted or authentication is positive.

## Description

### Field of the Invention

The invention relates to biometric voiceprint processing technology.

### Prior Art Discussion

International Patent Specification No. WO 00/30052 describes a system employing voiceprint biometrics. This relates to the processing of transactions and the use of voice verification to allow transactions to proceed. Transactions are accepted or rejected on the basis of various parameter values including an impostor ratio, cost of false accept, and cost of false reject.

US Patent Specification No. US5648648 relates to personal identification systems and in particular to a system for authenticating users through fingerprint image recognition to facilitate secure transactions. A specialised fingerprint input device is required.

European Specification No. EP0956818 describes a system for smartcard security and a method of biometric authentication of a smartcard user. The smartcard has an additional field for storage of a biometric sample. This system requires direct handling of the smartcard.

European Specification No. EP0416482 describes an electronic trading system and an automatic trading method and apparatus wherein a confirmation procedure is provided to verify that a subject trade is properly authorised. Confirmation occurs by a communication route different from the route of the automatic trading request, for example to a telephone number specified by the user. This system does not however, have a facility for verifying the identity of a user.

An object of the invention is to provide for improved use of biometrics technology for increased automation coupled with improved verification for transactions.

Another object is to enable online or wireless device users to execute transactions in a more secure manner.

### SUMMARY OF THE INVENTION

According to the invention, there is provided a method performed by an authentication system for customer authentication for a proposed transaction, , the method comprising the steps of:
capturing a voice sample from a user and comparing the sample with a stored voiceprint to determine a transaction score; and
in a decision step, authorising the transaction if the transaction score is on an acceptance side of a threshold and rejecting the transaction if the transaction score is on a rejection side of the threshold,
characterised in that the threshold is dynamically determined for the transaction.

In one embodiment, the threshold is determined according to a value (Cfa) for the transaction.

In another embodiment, the threshold is determined using an impostor ratio for the transaction.

In a further embodiment, the impostor ratio is determined according to a set of impostor ratio component values (I_{V}, I_{P}, I_{CLI}), each for a basic security layer required before authentication begins.

In one embodiment, the impostor ratio is determined according to a rate of attack (RA) for the type of transaction.

In another embodiment, the impostor ratio is determined according to recent transactions of the user.

In a further embodiment, a fresh threshold is determined if the transaction score is on a reject side of an initial threshold.

In one embodiment, said fresh threshold is determined after employing an additional security layer.

In another embodiment, the system requests verification of the additional security layer only if correct verification will result in the threshold being greater than the transaction score.

In a further embodiment, an additional security layer comprises requesting the customer to input a security code.

In one embodiment, an additional security layer comprises requesting the customer to input customer-specific information.

According to another aspect, the invention provides a transaction processing method comprising the steps of a customer requesting top-up of mobile phone pre-pay credit, characterised in that,
the request is transmitted by the mobile phone in a data message routed by the mobile network, and
in response, an authentication system calls the customer on his or her mobile phone and captures a voice sample during said call and performs authentication in a method as described above.

In one embodiment, the authentication system automatically determines the mobile phone number.

In another embodiment, the authentication system communicates verification data to a payment instrument issuer.

In a further embodiment, the customer request is sent via SMS.

In one embodiment, the request is made in a pre-set format according to a previous registration procedure.

In another embodiment, a transaction type is pre-selected during registration.

In a further aspect, the invention provides a method for registering for a transaction and for subsequently performing a transaction, the method comprising the step of:
in a registration phase:-
   a bank server recording:-
      a type of transaction to be performed,
      a customer account to be debited for the transaction,
      a customer mobile device number, and
      a customer identifier;
   the bank server transmitting a record with the captured data to an authentication system; and
   the authentication system calling the customer and capturing a voiceprint and confirming successful voiceprint capture to the bank server;
in a transaction phase:
   the customer transmitting a wireless data message requesting a transaction;
   the authentication system calling the customer, capturing a voice sample, and performing voice verification with reference to the captured voiceprint, and
   the authentication system indicating authentication outcome to the bank server and, if positive, the bank server debiting the customer's account and authorising the network operator to provide the service.

In another aspect, the invention provides an authentication system comprising:
a customer interface comprising means for voice communication;
a requesting server interface comprising means for receiving an authentication request from a requesting server;
means for performing customer authentication in a method as defined above; and
means for transmitting an authentication response via said requesting server interface.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a flow diagram illustrating an authentication process of the invention;
Figs. 2 and 3 are plots illustrating parameters calculated during verification;
Figs. 4 and 5 are more detailed flow diagrams illustrating steps of the process of Fig. 1 in more detail;
Fig. 6 is a flow diagram illustrating a process for customer registration; and
Fig. 7 is a flow diagram illustrating a process for requesting and processing a transaction to top-up a prepaid mobile phone and shows the roles of a voice verification engine, a banking server, and of a mobile operator.

### Description of the Embodiments

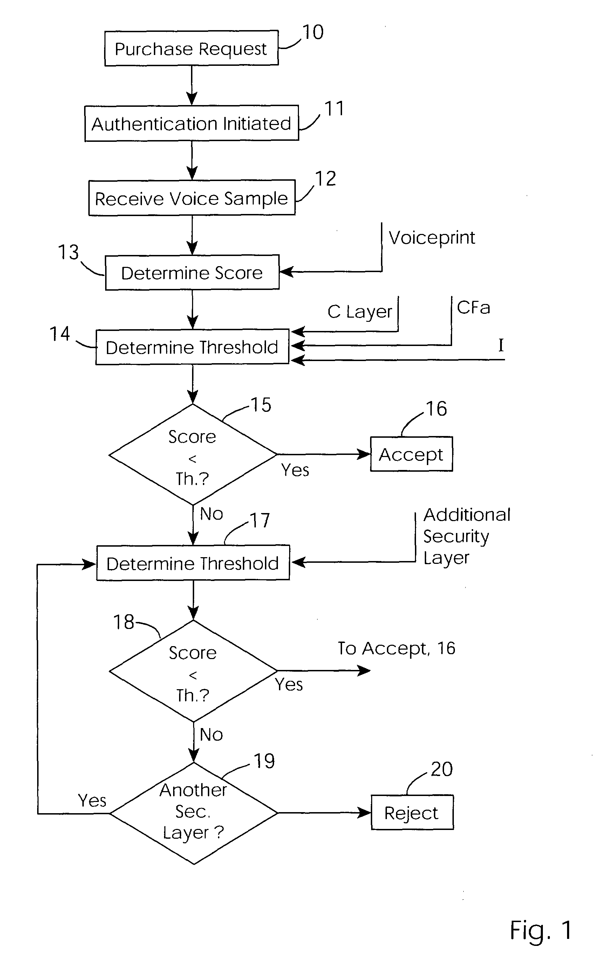

Referring to Fig. 1 a process 1 for customer authentication is illustrated at a high level.

In step 10 a purchase request is made, followed by initiation of authentication in step 11. An authentication server receives a biometric voice sample in step 12, and in step 13 it determines a score for the authentication by comparison of the voice sample with a reference voiceprint stored during registration. This comparison is carried out by a verification engine connected to the authentication server, although it may alternatively be remote.

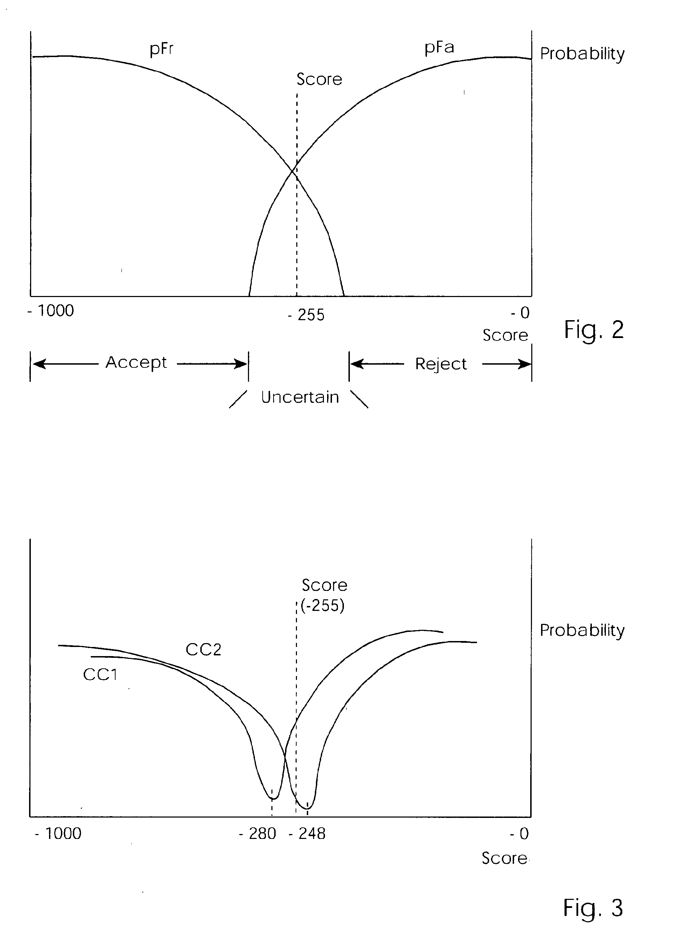

Referring to Fig. 2, the score is on a scale of 0 to -1000, in which the lower the value (most negative) the greater the probability of acceptance. The voiceprint comparison reveals Probability of False Reject (PFr) and Probability of False Accept (Pfa) curves as shown in Fig. 2. These probability curves define three regions:
definitely accept;
definitely reject; and
uncertain (horizontal axis for overlapping region of Pfr and Pfa curves).

In this example the score is -255. This stays constant for the remainder of the process 1.

In step 14 the system determines a threshold Th by generating a cost curve CClon the basis of:
the voice sample/voiceprint comparison,
the value of the proposed transaction (Cfa),
the impostor ratio (I), and
the cost of invoking a security layer (Clayer).

The minima of this cost curve provides the threshold (Th). A low transaction value shifts Th to the right, and vice-versa. Thus, the threshold Th is dynamically determined according to the above parameters. Where the proposed transaction is non-monetary, such as access control, a non-monetary value is assigned. As shown in Fig. 3 in this example the threshold Th is -280, and so a comparison step 15 does not result in acceptance (step 16) because the score (-255) is higher (to the right as illustrated).

As the threshold is lower than the score, in step 17 the system generates a new cost curve and re-calculates the threshold Th based on invoking additional security layers to determine a new Impostor Ratio I. If correct verification of the additional security layer results in a threshold greater than the score the system requests the customer to verify the additional layer. If not, the system reject the transaction. The Impostor Ratio I is dynamically generated according to the number and combination of security layers that are employed at a particular moment during the authentication process in addition to the variable Cfa. For example, the initial cost curve, CC1, might utilise an impostor ratio of 1:1000 while the request for an additional layer of security may increase this Impostor Ratio to 1:100000. The effect of this increase in the Impostor Ratio is to alter the threshold score by allowing the system to accept a voiceprint score that has a higher Pfa on the basis that additional safeguards have been employed. In this example a second cost curve, CC2, yields a new Th of -248 and so the system accepts in a step 18 as the score (-255) is now lower than Th (-248). However, if Th remained lower than the score further layers may be employed as indicated by step 19. If all additional security layers were exhausted, the system rejects the transaction in step 20.

The system is dependent upon an accurate voice biometric engine. However, no biometric measure is good enough in itself to always validate or reject users in a commercial environment. In reality, valid users will score poorly from time to time while inevitably impostors will occasionally (if rarely) score moderately well when compared with certain voiceprints. If the system were configured to ensure that impostors are never accepted by setting an authentication threshold at the point at which the Probability of a False Accept (pFa) is zero there would be a problem of valid users being sometimes rejected. By increasing the tolerance of the system from this point the risk of an impostor breach increases.

The invention addresses this problem by employing a number of additional layers of security that are invoked when the system deems appropriate. The logic that dictates when and how often additional layers are invoked depends upon a number of factors:
1. The value of the transaction (Cfa).
2. The actual voice biometric score (when compared with the stored voiceprint).
3. The impostor ratio I.
4. Rate of Attack (RA), and Risk Adjustment Factor (RAF) (that is calculated based on previous transaction history and user profile).
5. The cost associated with requesting an additional layer (C layer).
6. The cost associated with falsely rejecting a valid user (CFr).
7. The distribution and probability measures associated with the voiceprints of users (both valid and impostors).
8. The actual security characteristics of each individual layer.

The following sets out these factors in more detail.
1. The value for the cost of false accept (Cfa) is dynamic, depending on the transaction value. For example, a mobile telecommunications application may incorporate a large volume of low-value transactions, for example, for topping-up prepaid mobile phones, thereby resulting in relatively tolerant thresholds. On the other hand, a business-to-business purchasing portal may facilitate high value purchases that in turn require less tolerant thresholds. This variable is represented in the process by the Cfa (Cost of a false acceptance) as a breach of the security system would result in a loss equal to the transaction value.
2. The system is dependent upon an accurate voice verification engine. To achieve accuracy for a user group the system needs to have empirical evidence of the characteristics of that specific user group. This is achieved by capturing a statistically accurate sample of the user group. There is a requirement to collect data from users and perform cross-comparison analysis of valid users in the system.
3. The system uses an impostor ratio which is dynamically calculated according to parameter values for the request. These include the layers of security that have been employed prior to the user voice sample being captured. These layers include the UserID and Password and in addition may include automatic number identification (ANI) or Calling Line Identification (CLI) and an impostor measure depending upon whether a Public Key Infrastructure has been employed.
4. In step 14 the initial impostor ratio is multiplied by the Rate of Attack (RA) and then by the Risk Adjustment Factor (RAF). The RA is governed by the general rate of attack for a service and is not specific to the particular user. The RA is determined by observation of the rate of failed authentication attempts in proportion to the rate of successful authentication attempts. The Risk Adjustment Factor (RAF) is a front-end, application-dependent risk score, to provide a transaction-specific and user-specific impostor ratio. The system analyses the transaction history of a user and/or user profile and compares this with the transaction being processed by the system to produce a risk score. The RAF enables the system to react to unusual account activity by any particular user by making it more difficult for an individual to access the system. However, this will not cause valid users to be rejected. Conceptually, the system should be seen as a real time dynamic system that learns from previous transactions and protects the client when confronted by increased impostor attacks. The RAF is calculated based on logic such as outlined below:
a) Number of attempts to access the system within a certain period of time (e.g. three attempts within 24 hours)
b) Amount requested for top-up when compared with the average transaction history (e.g. requesting EUR100 when the users average top-up is EUR20).

The calculation of the RAF is not limited to these parameters and can include rules regarding customer transaction history or profile. The RAF can be used to alter the status of a users account to 'L' or 'lock-out' if the unusual account activity exceeds certain rules based on the above criteria for example where an individual attempting to top up EUR100 on an account with an average transaction history of EUR20 fails to be authenticated and then requests another EUR100 immediately afterwards.
5. The system stores a value (C layer) for the cost of requesting a security layer. This cost is constant for a particular application and is a measure of the cost associated with ensuring that a user is in a position to effect a transaction if he or she correctly verifies the security layer that is requested. For example this may be the cost of the extra amount of time spent on the call by the end user once he or she has been requested to input his or her PIN.
6. The system also stores a value for the cost of a false reject (CFr), this also being constant for a particular application and being a measure of the cost associated with ensuring that a falsely rejected user is in a position to effect a transaction on an alternative channel such as a call centre. For example this may be the cost of a customer service representative's time spent on a call.
7. The system continues to learn with each and every valid authentication or rejection. Over time, the system's impostor ratio I will fluctuate with the distribution of impostor attacks and valid system use. Inevitably, at a certain point the scale of historical observation will ensure that any short-term impostor attack is unlikely to significantly alter the behaviour of the system.
8. The following is a table indicating the possible security layers. The actual parameter values in terms of impostor ratios depend entirely upon the application of the system. The table is indicative of the manner in which Impostor Ratios I can be used to dynamically adjust the threshold.

| **Risk Assessment based on T5 layered security** | | | | | |
|---|---|---|---|---|---|
| ***Layer*** | ***Ratio I:*** | **Phone** | **WAP** | **WWW** | **Digital** |
| Voice Biometric | 100 | Y | Y | Y | Y |
| PKI | 1 | N | N | Y | N |
| Wallet PIN & PW | 20 | Y | Y | Y | Y |
| ANI | 5 | Y | Y | N | Y |
| Device PIN | 2 | Y | Y | N | N |
| Virtual CC | 15 | N | N | Y | N |
| Address Check | 10 | N | N | Y | Y |
| CVV2 | 10 | Y | Y | Y | Y |
| RA | 100 | 100 | 100 | 100 | 100 |

Ratio I is the impostor ratio associated with each individual security layer. For example the system calculates that the risk of an impostor knowing a credit card holders CVV2 as 1 in 10. The four right-most columns indicate the available security layers for a particular application. For example, phone access results in voice biometric, PIN, ANI, device PIN, and bank card number (CW2) layers being available. RA is the rate of attack, described above.

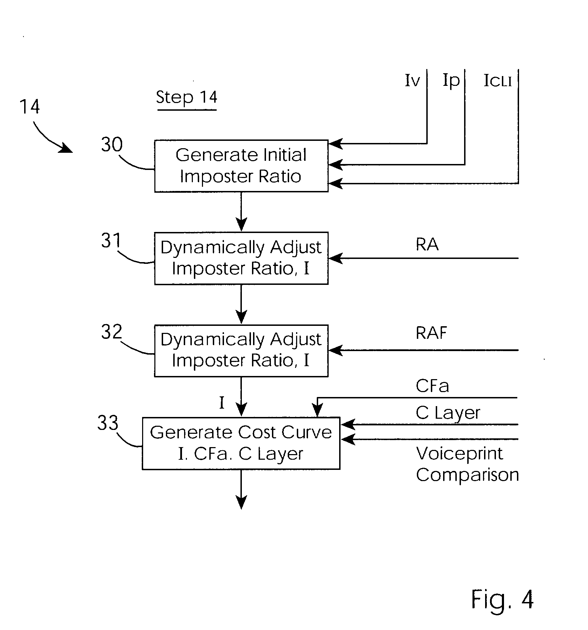

In more detail, and referring to Fig. 4 operation of the system for step 14 is illustrated. In sub-step 30 an initial value for the Impostor Ratio I is generated by multiplying the security layers that an impostor must pass in order to invoke an additional security layer. As an example for a phone access based system these could be:
a voice-related impostor ration Iv,
a PIN-related impostor ratio I_{P},
a calling-line-indicator related impostor ratio I_{CLI}, and

This initial value of I is determined for a particular service and user access mechanism and does not depend on the particular customer, the value of the proposed transaction (CFa), or the current rate of attack RA. It may be predetermined and stored by the authentication system.

In sub-step 31 the system dynamically adjusts I according to RA, thus making it a function of the experience of fraudsters attempting transactions for the particular service. The initial value of I is multiplied by RA.

In sub-step 32, the system dynamically adjusts I again, this time according to the RAF. The RAF is dependent on the recent activity of the particular user, and it incorporates:
Cfa (Value),
a user profile,
the time since previous transaction and frequency of transactions generally.

Finally, in sub-step 33 the system generates the cost curve CC1 using:
the value of I generated in sub-step 32,
CFa,
Clayer, and
the voiceprint comparison.

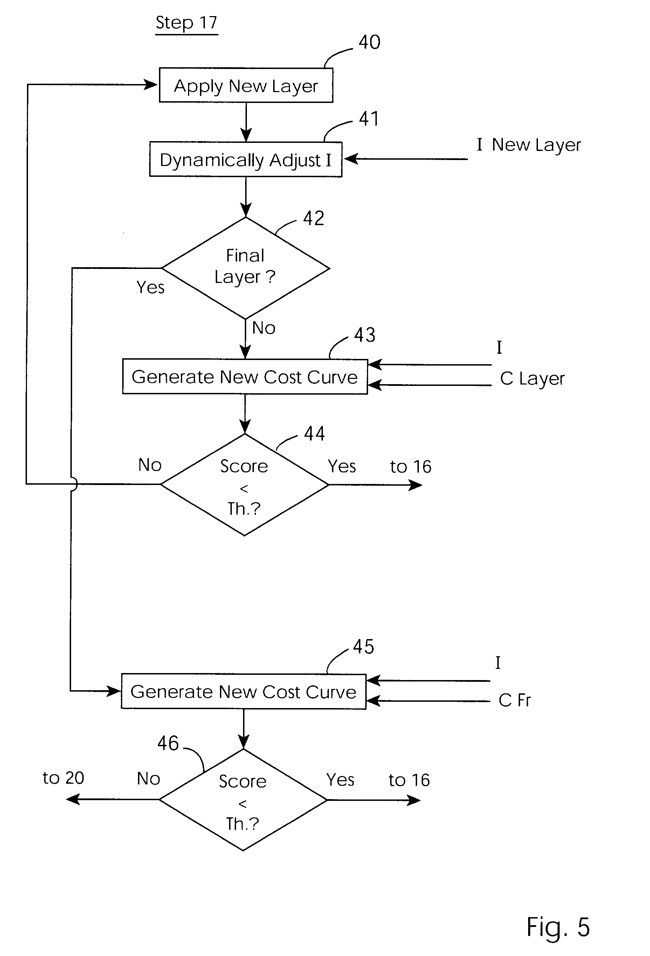

Referring to Fig. 5, operation of the system for step 17 is illustrated.

A further security layer is employed in sub-step 40, and the value for I is dynamically adjusted using an I value for the additional layer in sub-step 41. As an example this could be a request for a bankcard or CVV2 number which has an impostor ratio of 1:10 as per the table above. As indicated by the decision step 42, if all available additional security layers have not been employed a new cost curve is generated using the value for I from sub-step 41 and cost of the latest layer Clayer. Sub-steps 40 to 43 are repeated until acceptance (sub-step 44) or the final layer is reached. In sub-step 45 a cost curve is generated for the final layer, in this case using Cfr and the latest value of I.

Following sub-step 45 if Th is still less than the score the system rejects, as indicated by decision step 46.

It will be appreciated that the system can authenticate every cardholder not-present financial transaction by combining voice biometrics with a number of other security layers (CW2 for example). The authentication record is stored on a system server when a transaction is executed. Subsequently, when the authorisation/payment request is received, the server can authorise the transaction (after a credit check) in the full knowledge that the transaction is not fraudulent. In addition, the owner of the system can objectively assess any repudiation attempt by the cardholder. Even though it may be the merchant who ultimately loses in the world of cardholder not present payments, the banks and telecommunications companies incur substantial costs when processing repudiated transactions/chargebacks. Consequently, with this invention, any repudiation by a cardholder or subscriber should only be as a result of a fraudulent merchant or a situation where goods are not delivered.

### Transaction Example

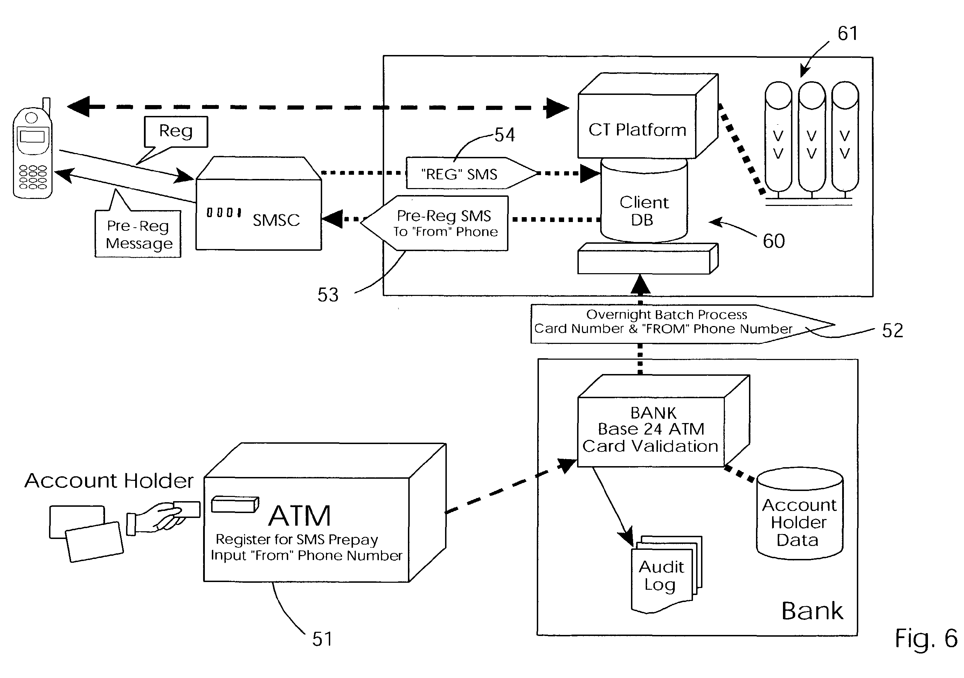

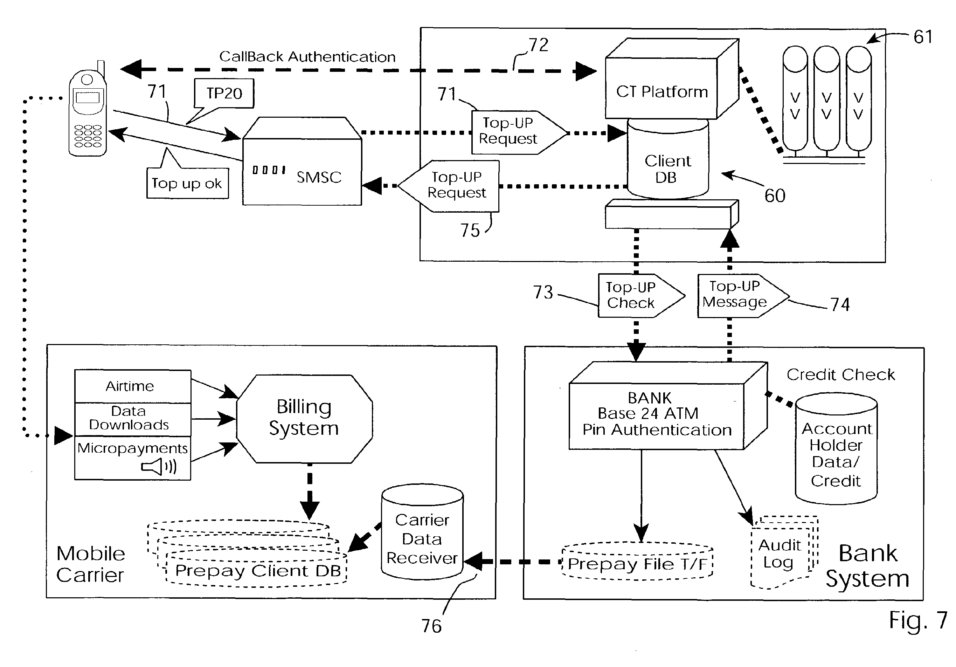

Referring to Figs. 6 and 7 an example of implementation of the verification system and process is illustrated for a particular type of transaction, namely topping up a mobile phone account. This is a transaction that many mobile phone subscribers perform frequently and would like if it were quicker and more convenient. In this case the layered security and voice verification process is used in conjunction with an existing banking server and a mobile operator.

The customer needs to pre-register to use the system, and Fig. 6 describes the process of registration. In this embodiment the customer registers with a financial institution. It is possible to register by visiting a bank branch, by dialling an online banking service or, as described, at an ATM.

### Registration at an ATM 51

The customer inputs her bank card and enters an associated PIN. The customer may have successfully accessed other services available from the ATM and is free to select the top-up service. The customer inputs a 'From' phone number. This is the customer's primary mobile phone number and represents the number she wishes to be called on for verification. In addition, the customer selects one or more 'To' numbers i.e. the numbers she wants to be able to top-up. The customer is then requested to confirm these details. Finally, the customer is issued with a receipt with instructions on how to initiate the voice registration process, the voice registration process itself, how to use the top-up service, how to change the phone numbers, and what to do when she is issued a new bankcard.

On a daily basis, a file 52 containing all new registration requests is batched to a database 60.

Once received, the database 60 sends an SMS 53 to newly registered customers to initiate enrolment. The customer initiates the voice enrolment process by sending a pre-defined text message 54 (such as "Reg") to a pre-selected number such as 5555. A voice verification engine 61 calls each customer on the registered number, and asks the customer to input her card number (or other appropriate security layer) to confirm identity.

The customer is then requested to repeat twelve semi-random numeric phrases, for example four-seven-nine-six. Alternatively, the engine 61 may use Account Number Verification (ANV) or a Password verification. Once the customer has successfully completed enrolment the call is ended. If the enrolment process is unsuccessful the customer is informed by SMS and requested to retry the entire process.

### Transaction

Fig. 7 illustrates a process whereby the registered customer may request that her mobile phone be topped-up by sending an SMS request to a merchant server. The details for authentication have already been stored in the engine 61, which can perform voice verification for a proposed transaction as required.

The transaction flow is as follows:
- A wireless device user sends a top-up request SMS 71. The SMS 71 has a specific format.
- The database 60 captures the data message and formats the data into an authentication record using a data conversion protocol. This authentication record is transmitted to the verification engine 61.
- The verification engine 61 performs a data integrity check before generating a verification request to its automated verification functions.
- The verification engine 61 initiates a telephone call 72 to a designated wireless device and requests the user to provide suitable data (that includes the capture of a voiceprint) to successfully authenticate the customer and thereby validate the transaction.
- The verification function subsequently transmits a verification data message to a server of the engine 61 to indicate completion of the authentication process.
- The engine 61 server sends an authorisation request 73 to the bank system.
- The bank system completes a funds/credit check and returns an authorisation message 74 to the engine 61.
- The database 60 transmits a confirmation SMS 75 to the customer, and the bank system submits a top-up request 76 to the mobile operator.

The underlying system operations performed are as follows:
- The request SMS message sent from customers' phone is relayed to an SMS-XML parser.
- An XML version of the message is then passed to a customer transaction database where transaction is verified that:
   i. Proper XML file
   ii. Incoming SMS message is from a valid phone number
   iii. Verifies requested transaction is allowed to take place
- A valid verification request is created and added to the audit trail.
- Request is sent to the client database 30 where additional security checks are carried out.
- Transaction passed to the voice verification engine 31 and call back initiated via a CTI platform to authorise transaction and verify users identity.
- When transaction is authorised an ODBC stream is passed to a reporting engine to facilitate billing.
- Transaction routed to a verification update engine.
- Customer transactional database audit trail closed and database updated.
- Authorised transaction passed to protocol transverter as on XML stream.
- Data in customer format passed to customer's payment process.

It will be appreciated that the foregoing embodiment provides a very simple, quick and secure mechanism for performing transactions. The customer does not need a computer, or even a browser on a mobile phone. All that is required is that she sends a short message and co-operates with the callback verification step.

All other steps are performed automatically. This is a particularly convenient approach to transactions performed frequently.

The invention is not limited to the embodiments described but may be varied in construction and detail. In particular, the choice (or combination) of security layer(s) may be varied.

In addition, the invention may be applied to non-value based activities, such as system access. The system would incorporate a variable Cfa on the basis that different levels of access within a system may lead to a variable cost to an organisation.

## Claims

**1.** A method performed by an authentication system for customer authentication for a proposed transaction, , the method comprising the steps of:
capturing (12) a voice sample from a user and comparing (13) the sample with a stored voiceprint to determine a transaction score; and
in a decision step, authorising the transaction if the transaction score is on an acceptance side of a threshold and rejecting the transaction if the transaction score is on a rejection side of the threshold,
**characterised in that** the threshold is dynamically determined (14, 17) for the transaction.

**2.** A method as claimed in claim 1, wherein the threshold is determined according to a value (Cfa) for the transaction.

**3.** A method as claimed in claim 2, wherein the threshold is determined using an impostor ratio for the transaction.

**4.** A method as claimed in claim 3, wherein the impostor ratio is determined according to a set of impostor ratio component values (I_{V}, I_{P}, I_{CLI}), each for a basic security layer required before authentication begins.

**5.** A method as claimed in claims 3 or 4, wherein the impostor ratio is determined (31) according to a rate of attack (RA) for the type of transaction.

**6.** A method as claimed in any of claims 3 to 5, wherein the impostor ratio is determined according to recent transactions of the user.

**7.** A method as claimed in any preceding claim, wherein a fresh threshold is determined (17) if the transaction score is on a reject side of an initial threshold.

**8.** A method as claimed in claim 7, wherein said fresh threshold is determined (40) after employing an additional security layer.

**9.** A method as claimed in claim 8, wherein the system requests verification of the additional security layer only if correct verification will result in the threshold being greater than the transaction score.

**10.** A method as claimed in claims 9 or 10, wherein an additional security layer (40) comprises requesting the customer to input a security code.

**11.** A method as claimed in any of claims 8 to 10, wherein an additional security layer (40) comprises requesting the customer to input customer-specific information.

**12.** A transaction processing method comprising the steps of a customer requesting top-up of mobile phone pre-pay credit, **characterised in that**,
the request is transmitted by the mobile phone in a data message (71) routed by the mobile network,
in response, an authentication system (60, 61) calls the customer (72) on his or her mobile phone and captures a voice sample during said call and performs authentication in a method as claimed in any of claims 1 to 11.

**13.** A method as claimed in claim 12, wherein the authentication system automatically determines the mobile phone number.

**14.** A method as claimed in claims 12 or 13, wherein the authentication system communicates verification data to a payment instrument issuer.

**15.** A method as claimed in any of claims 12 to 14, wherein the customer request is sent via SMS (71).

**16.** A method as claimed in claim 15, wherein the request is made in a pre-set format according to a previous registration procedure.

**17.** A method as claimed in claim 16, wherein a transaction type is pre-selected during registration.

**18.** A method for registering for a transaction and for subsequently performing a transaction, the method comprising the step of:
in a registration phase:-
a bank server recording:-
a type of transaction to be performed,
a customer account to be debited for the transaction,
a customer mobile device number, and
a customer identifier;
the bank server transmitting a record with the captured data to an authentication system; and
the authentication system calling the customer and capturing a voiceprint and confirming successful voiceprint capture to the bank server;
in a transaction phase:
the customer transmitting a wireless data message requesting a transaction;
the authentication system calling the customer, capturing a voice sample, and performing voice verification with reference to the captured voiceprint, and
the authentication system indicating authentication outcome to the bank server and, if positive, the bank server debiting the customer's account and authorising the network operator to provide the service.

**20.** An authentication system comprising:
a customer interface comprising means for voice communication;
a requesting server interface comprising means for receiving an authentication request from a requesting server;
means for performing customer authentication in a method as claimed in any of claims 1 to 12; and
means for transmitting an authentication response via said requesting server interface.

**21.** A computer program product comprising software code for performing software code for performing a method as claimed in any of claims 1 to 12 when executing on a digital computer.
